# EUROPÄISCHE PATENTANMELDUNG

(11) **EP 3 613 490 A2**
(43) Veröffentlichungstag der Anmeldung: **26.02.2020**
(21) Anmeldenummer: 19000387.1
(22) Anmeldetag: 26.08.2019
(51) Int. Cl.: B01D 46/00, F01P 11/12

(54) **SELBSTFAHRENDE ERNTEMASCHINE MIT KÜHLLUFTFILTER**

(30) Priorität: 24.08.2018 DE 102018006701
(71) Anmelder: Maschinenfabrik Bernard Krone GmbH & Co. KG, 48480 Spelle (DE)
(72) Erfinder: Berling, Michael, 49584 Fürstenau (DE); Börger, Jens, 48432 Rheine (DE)

(57) **Zusammenfassung**

Selbstfahrende Erntemaschine mit einem Fahrgestell, an dem Mittel zum Abstützen auf dem Erdboden angeordnet sind, welche ihrerseits durch einen Antriebsmotor zur Fortbewegung über den Erdboden antreibbar sind und einer Kühlereinheit zur Kühlung von zumindest einem Aggregat der selbstfahrenden Erntemaschine, wobei die Kühlereinheit von einer Filtervorrichtung mit einem luftdurchlässigen Filterelement vor Verunreinigungen, wie Staub, Ernteresten oder ähnlichen Verschmutzungen geschützt wird, wobei das Filterelement mehrteilig durch Filtersegmente ausgeführt ist und die Filtersegmente zu Wartungszwecken einzeln entnommen werden.

## Beschreibung

Die Erfindung betrifft eine selbstfahrende Erntemaschine mit einem Antriebsmotor und einer Kühlereinheit. Um eine etwa gleichbleibende Kühlleistung zu erhalten, sind die Kühlereinheiten dieser Erntemaschinen für gewöhnlich mit Filtervorrichtungen ausgestattet, welche Verschmutzungen verhindern oder zumindest erschweren.

Selbstfahrende Erntemaschinen benötigen aufgrund einer Vielzahl von Aggregaten eine ausreichende Kühlung. Bei einigen der zu kühlenden Aggregate handelt es sich beispielsweise um den Motor, die Hydraulik und vermehrt auch die Elektrik und Elektronik. Der steigende Bedarf an ausreichender und gleichbleibender Kühlleistung wird bei den meisten Erntemaschinen durch immer leistungsstärkere Aggregate erforderlich. Verschärft wird die Problematik dadurch, dass die üblichen Erntebedingungen eine staubige und von Erntegutresten wimmelnde Umgebung bewirken. Eingesetzte Luftstromerzeuger verbessern zwar die Kühlleistung enorm, beschleunigen allerdings ebenso ein Verschmutzen und somit ein Verstopfen der Kühlereinheit. Um zu verhindern, dass die Kühlereinheit zu schnell verstopft und somit in ihrer Leistung behindert wird, werden seit geraumer Zeit Filter eingesetzt. Diese Filter fangen einen Großteil der Schmutzpartikel der Umgebung und besonders des erzeugten Luftstroms vor der Kühlereinheit ab. Damit die eingesetzten Filter nicht selbst Teil des Problems werden und den benötigten Luftstrom blockieren, werden häufig Reinigungsvorrichtungen eingesetzt.

Im Stand der Technik sind Lösungen bekannt welche das Problem grundsätzlich geschickt angehen. Zumeist werden Filtervorrichtungen mit zylindrischen oder kegelig ausgeführten Filterelementen eingesetzt, um in einfacher Weise eine Reinigungsvorrichtung einsetzen zu können. Dabei wird entweder die Filtervorrichtung oder die Reinigungsvorrichtung rotierend angetrieben, um eine möglichst vollständige und durchgängige Reinigung der Filter zu ermöglichen. Für gewöhnlich sind die Reinigungsvorrichtungen als mit Bürsten verbesserte Absaugvorrichtungen ausgeführt.

Bei besonders widrigen Bedingungen, beispielsweise nassem Erntegut oder feuchter Umgebung, reichen die bekannten Reinigungsvorrichtungen jedoch nicht aus. Die derart entstehenden Verschmutzungen haften zu sehr an den Filterelementen und müssen daher in der Regel von einem Bediener oder Wartungspersonal bereinigt werden.

Darüber hinaus lässt sich nicht verhindern, dass das Filterelement regelmäßig zu Wartungszwecken von der Filtervorrichtung der Kühlereinheit entfernt werden muss, um beispielsweise die Kühlereinheit oder das Filterelement selbst zu warten.

Aufgrund des üblicherweise sehr begrenzten Bauraums in selbstfahrenden Erntemaschinen, auch bzw. besonders im Bereich einer Kühlereinheit, ist es für gewöhnlich nicht sinnvoll, einen einfachen Schwenkmechanismus einzusetzen, um den Zugang zur Kühlereinheit zu ermöglichen. Ganz besonders kommt der Platzmangel bei selbstfahrenden Feldhäckslern zum Tragen. Denn in der Regel wird die Kühlereinheit bei Feldhäckslern mittig in der Maschine positioniert. Hierbei bleibt zwischen den unter und hinter einer Kabine verlaufenden Arbeitsaggregaten wie beispielsweise einem Aufbereiter, einem Wurfbeschleuniger und einer Auswurfvorrichtung und dem im Heck befindlichen Antriebsmotor kaum Platz. Bei einem Großteil der bekannten Filtervorrichtungen wird dieser Umstand durch ihre zuvor erwähnte Bauart noch verstärkt.

Die EP 1 228 295 B1 eröffnet eine als Siebeinrichtung beschriebene Filtervorrichtung für eine Kühlereinheit, welche mit Hilfe einer komplexen Kinematik aus dem Wartungsbereich geschwenkt werden kann. Problematisch bei dieser Konstruktion sind jedoch die verschiedenen Hebel und Gelenke, welche für die Ausführung benötigt werden. Dieser erhöhte konstruktive Aufwand lässt auf einen erhöhten Zeit- und Kostenaufwand schließen.

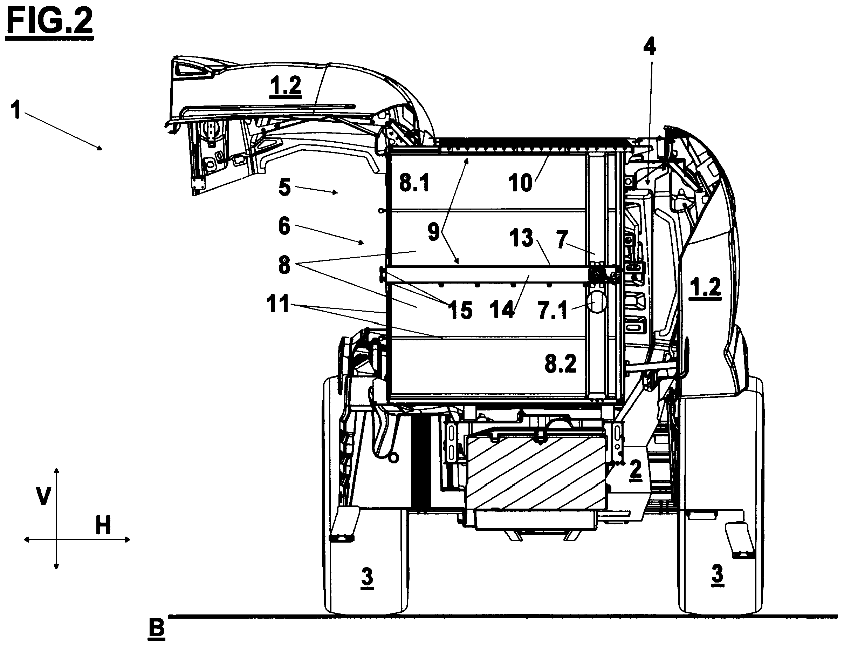

In der DE 10 2008 040 902 B4 wird eine Siebeinrichtung mit perforiertem Filterelement beschrieben, welche durch eine quadratische Platte mit kreisförmigem Ausschnitt für das Filterelement kombiniert ist. Diese Filtervorrichtung lässt sich gemäß des Patents quer zur Fahrtrichtung aus dem Bereich der Kühlereinheit verschieben. Als nachteilig bei dieser Ausführung wird die komplexe Ansteuerung des in der FIG. 2 angedeuteten Rotationsantriebs für das Filterelement erweisen. Darüber hinaus reichen kreisförmige Ausschnitte in Filtervorrichtungen nicht mehr hinreichend aus, um den Bedarf an Kühlung durch die Kühleinrichtung zu ermöglichen.

Der vorliegenden Erfindung liegt demnach die Aufgabe zugrunde eine selbstfahrende Erntemaschine vorzuschlagen, deren Filtervorrichtung für die Kühlereinheit sowohl platzsparend und kostengünstig ist, als auch die Wartung angrenzender Bereiche, sowie der Kühlereinheit erleichtert und zudem eine größtmögliche Kühlleistung der Kühlereinheit zulässt.

Gelöst wird die Aufgabe durch eine selbstfahrende Erntemaschine mit einer Filtervorrichtung gemäß dem Kennzeichen des Anspruchs 1. Sinnvolle Erweiterungen und alternative Ausführungen gehen aus den Unteransprüchen sowie den Beschreibungen hervor. Die auftretenden Positions- und Richtungsangaben, wie "oben", "unten", "links", "rechts", "vorne" und "hinten", entsprechen der Ansicht einer Person mit dem Blick in Fahrtrichtung der selbstfahrenden Erntemaschine gerichtet.

Erfindungsgemäß wird diese Aufgabe durch eine selbstfahrende Erntemaschine mit einem Fahrgestell gelöst, an dem Mittel zum Abstützen auf dem Erdboden angeordnet sind, welche ihrerseits durch einen Antriebsmotor zur Fortbewegung über den Erdboden antreibbar sind und einer Kühlereinheit zur Kühlung von zumindest einem Aggregat der selbstfahrenden Erntemaschine, wobei die Kühlereinheit von einer Filtervorrichtung mit einem luftdurchlässigen Filterelement vor Verunreinigungen, wie Staub, Ernteresten oder ähnlichen Verschmutzungen geschützt wird, wobei das Filterelement mehrteilig durch Filtersegmente ausgeführt ist und die Filtersegmente zu Wartungszwecken einzeln entnommen werden.

Bevorzugt wird hierbei eine Ausführung, bei der ein Führungssystem in einer Ebene liegt, welche durch zumindest eine etwa vertikale Gerade gebildet wird. Bevorzugt wird hierbei eine Ebene, welche zusätzlich durch eine horizontale Gerade gebildet wird, welche quer etwa zur Fahrtrichtung der selbstfahrenden Erntemaschine ausgerichtet ist. Das aus wenigstens zwei Filtersegmenten bestehende Filterelement der Filtervorrichtung wird zumindest entlang je einer Kante durch das Führungssystem vor der Kühlereinheit in Position gehalten. Durch diese Ausführung kann eine besonders hohe Effektivität der Kühlkörper einer Kühleinheit erreicht werden. Denn durch das Führungssystem können die Filtersegmente auch mit einer rechteckigen Oberfläche ausgeführt werden. Hierdurch wird ein verbesserter Luftstrom zu den Kühlkörpern der Kühlereinheit erreicht.

Geschickter Weise bestehen die Filtersegmente aus einem Rahmen, welcher dazu eingerichtet ist, das luftdurchlässige Material zu stabilisieren. Dieser Rahmen kann darüber hinaus dazu eingesetzt werden, mit einem Führungselement des Führungssystems in Eingriff gebracht zu werden. Beispielsweise wird ein Führungselement als U-Profil ausgeführt. Der Rahmen kann nun aus einem einfachen, in das U-Profil passenden Rohr, gefertigt werden. Vergleichbar einer Nut und einer Feder können Filterelement und Führungselement zusammenwirken.

Praktisch wäre überdies eine Ausführung, bei welcher die Filtersegmente an einer Kante durch ein Führungselement schwenkbar aufgenommen werden. Die dem Führungselement gegenüberliegenden Kante des Rahmens wird nun an einen passenden Anschlag geschwenkt, sodass das Filtersegment des Filterelements einen Bereich der Kühlereinheit abdeckt. An diesem Anschlag sorgt beispielsweise ein Klemmelement dafür, dass das Filtersegment bestenfalls werkzeuglos fixiert wird. Alternative Ausführungen beinhalten Drehspannelemente oder Schraubverbindungen.

Durchaus geschickt scheint darüber hinaus der Einsatz von Federelementen. Dabei kann ein Filtersegment in ein Führungselement des Führungssystems eingesetzt werden. Der Abstand von dem Führungselement bis zu dem gegenüberliegenden Führungselement/ Anschlag überschreitet dabei die Höhe des Filtersegments um die Tiefe eines Führungselements. Durch in dem Führungselement eingelassene Federn wird die Höhe ausgeglichen und bestenfalls der Abstand soweit verringert, dass der Abstand der Feder zur Gegenseite geringer ist, als die Höhe des Führungselements. Wird nun das Filtersegment gegen den Druck der Federn in das mit den Federn versehene Führungselement gedrückt, kann die gegenüberliegende Kante des Filtersegments über das Führungselement verschoben werden und durch den Druck der Federn dort eingeklemmt werden.

Eine weitere Ausführung sieht einfache Schieberiegel als Alternative vor. Dabei kann es ausreichen, die entsprechenden Kanten des Rahmens des Filtersegments zwischen einem Anschlag und einem Riegel einzuklemmen. Zur gleichzeitigen Sicherung gegen Verrücken in verschiedenen Dimensionen bietet es sich möglicherweise an, die Rahmen der Filtersegmente mit passenden Bohrungen zu versehen.

Besonders effektiv erscheint eine Ausführung, bei der das Führungssystem je zwei gegenüberliegende Kanten der Filtersegmente durch Führungselemente aufnimmt. Die einfachste Lösung bliebe hierbei sicherlich der Einsatz wenigstens zweier, sich gegenüberliegenden U-Profile als Führungselement. Der Rahmen der Filtereinheit wird dabei mit diesen U-Profilen in Eingriff gebracht. Alternativ könnte der Rahmen der Filtersegmente mit Profilschienen versehen werden, sodass die Führungselemente des Führungssystems als einfache Platten, Profile oder möglicherweise Rollen ausgeführt werden können. Andere Gleit- oder Rollenlager können den Komfort bei einer anstehenden Wartung möglicherweise noch erhöhen.

Spannend wird der Einsatz von zumindest zwei Filtersegmenten, auch in Hinblick auf die Reinigungsvorrichtung. Eine translatorische bewegbare Reinigungseinrichtung konnte bisher nur mit Hilfe wenigstens zweier Führungen, über die im Stand der Technik bekannten Filtervorrichtungen, verfahren werden. Durch die Ausführung einer Filtervorrichtung mit einem wenigstens zwei Filtersegmente aufweisendem Filterelements ist es jedoch möglich, die Reinigungsvorrichtung mit Hilfe nur einer Führung entlang der Filtersegmente zu bewegen. Sinnvoller Weise wird diese Führung etwa entlang der Mitte der Filtervorrichtung positioniert. Idealverweise werden die Filtersegmente identisch angefertigt. Dadurch würden Kosten in der Herstellung gespart. Darüber hinaus wird die Wartung vereinfacht. Denn selbst während des Betriebs unter extremen Bedingungen könnte auf diese Weise ein Filtersegment einfach ausgetauscht werden, sollte die manuelle Reinigung zu viel Zeit in Anspruch nehmen.

Schließlich ermöglicht eine wünschenswerte Ausführung eine simple Option, um das mehrteilig ausgeführte Filterelement in seiner vorgesehenen Position in der Filtervorrichtung zu halten. Besonders beim Einsatz von Führungselementen wie Schienen, Profilen oder ähnlichen scheint es logisch, wenigstens an einem Ende die Führung mit einem Halteelement zu versehen. Dabei sollte dieses Halteelement wenigstens derart dimensioniert sein, dass die Filtersegmente nicht über die Führungselemente hinaus verschoben werden können.

Ein vergleichbares Halteelement sollte dabei am anderen Ende des Führungselements lösbar angeordnet sein. Dadurch wird eine einfache, schnelle und flexible Wartung ermöglicht. Gleichzeitig wird das Filterelement gegen unerwünschte Verlagerung gesichert. Vorzugsweise wird hierbei ein Schwenkriegel eingesetzt. Dieser kann beispielsweise zusätzlich mit einem Drehspannelement in seiner Position gegen versehentliches Entriegeln gesichert werden. Selbstverständlich sind auch andere Sicherungseinrichtungen vorstellbar. Allerdings werden Einrichtungen bevorzugt, welche ohne den Einsatz von Werkzeug eingesetzt werden können.

**Bezugszeichenliste:**

| | |
|---|---|
| 1. Selbstfahrende Erntemaschine | B - Erdboden |
| 2. Fahrgestell | F **-** Fahrtrichtung |
| 3. Mittel zum Abstützen | V **-** vertikale Gerade |
| 4. Antriebsmotor | H - horizontale Gerade |
| 5. Kühlereinheit | Eᵥ - vertikale Ebene |
| 6. Filtervorrichtung | P_{E}-Endpunkt |
| 7. Reinigungsvorrichtung | P_{A} - Anfangspunkt |
| 8. Filterelement | |
| 9. Führungssystem | |
| 10. Kante | |
| 11. Rahmen | |
| 12. Führungselement | |
| 13. Kante | |
| 14. Führung | |
| 15. Sicherungsmechanismus | |
| | |
| 1.1 - Kabine | |
| 1.2 - Verkleidung | |
| | |
| 7.1 - Absaugöffnung | |
| | |
| 8.1 - Filtersegment | |
| 8.2 - Filtersegment | |

Nachfolgend wird eine bevorzugte Ausführungsform der Erfindung anhand einiger Zeichnungen näher beschrieben. Die Zeichnungen zeigen:
**FIG.1****:** eine isometrische Darstellung einer selbstfahrenden Erntemaschine, ausgeführt als selbstfahrender Feldhäcksler, wobei durch eine geöffnete Seitenverkleidung und verschobenem Filterelement eine Wartungsposition angedeutet wird;
**FIG.2****:** eine Schnittdarstellung einer selbstfahrenden Erntemaschine, wobei die zuvor dargestellte Wartungsposition aufgegriffen wird, die Filtersegmente des Filterelements jedoch in Ausgangsposition verweilen;
**FIG.3****:** eine detaillierte Darstellung der erfindungsgemäßen Filtervorrichtung mit einem aus zwei Filtersegmenten bestehenden Filterelement, welches mit Hilfe eines Führungssystems teilweise zur Wartung verschobenen ist.

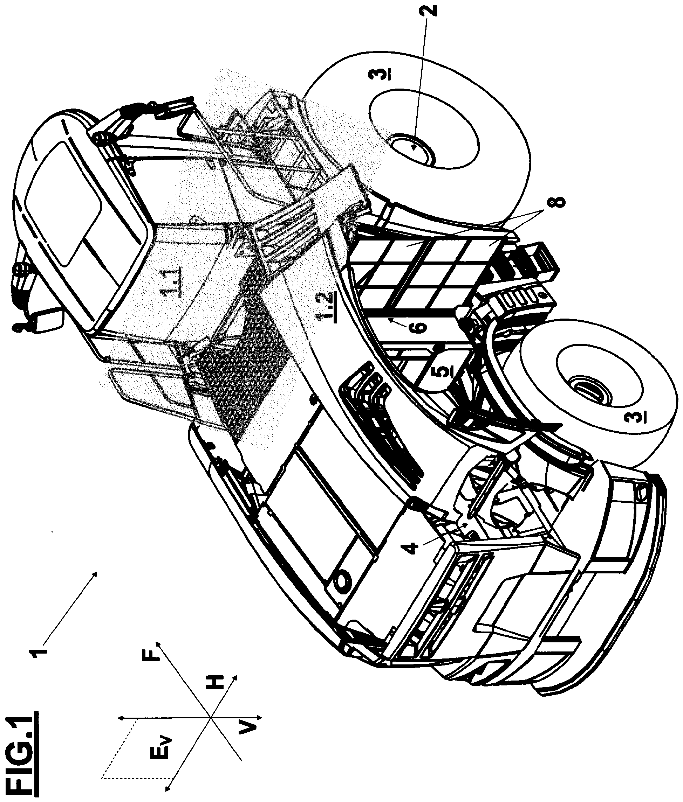

In der **FIG.1** ist eine selbstfahrende Erntemaschine 1 in einer isometrischen Ansicht von hinten rechts dargestellt. Als Beispiel für eine selbstfahrende Erntemaschine 1 wird an dieser Stelle ein Feldhäcksler genutzt. Hierbei ist zu erwähnen, dass irritierende Aggregate der Einfachheit halber ausgeblendet sind. Hierzu gehört beispielsweise der Auswurfbogen. Derartige selbstfahrende Erntemaschinen 1 verfügen über ein Fahrgestell 2, welches Mittel zum Abstützten 3 auf dem Erdboden B aufweisen. In den meisten Fällen werden hierbei Räder eingesetzt, vergleichbar mit den in der Darstellung sichtbaren Rädern. Weiterhin ist die selbstfahrende Erntemaschine 1 mit einer Kabine 1.1 ausgestattet. Ein Teil der die selbstfahrende Erntemaschine 1 umgebenden Verkleidung 1.2 ist geöffnet dargestellt. Dadurch werden einige Komponenten und deren Position am Fahrgestell 2 der selbstfahrenden Erntemaschine 1 deutlicher erkennbar. Angedeutet sind hierbei beispielsweise die Kühlereinheit 5. Unter der Verkleidung 1.2 angedeutet erkennbar, befindet sich der zu kühlende Antriebsmotor 4. Ebenso wird eine der Kühlereinheit 5 vorangehende Filtereinheit 6 sichtbar. Diese ist besonders durch ein mehrteiliges Filterelement 8 zu erkennen. Darüber hinaus sind eine vertikale Gerade V und eine horizontale Gerade H angedeutet. Die gewählte horizontale Gerade H ist hierbei quer zur Fahrtrichtung F ausgerichtet. Dadurch kann ein Ausschnitt der Ebene Ev dargestellt werden. Diese Ebene Ev wird als grobe Orientierung für die ausführungsgemäße Verschiebung der Filterelemente 8 der Filtereinheit 6 genutzt. Das Filterelement 8 wird also parallel zu der Ebene Ev nach rechts aus der Filtervorrichtung 6 entfernt.

Die **FIG.2** zeigt die selbstfahrende Erntemaschine 1 in einer Schnittansicht, wobei der Schnitt parallel zur angedeuteten Ebene Ev verläuft. Dadurch wird der vordere Bereich der selbstfahrenden Erntemaschine 1 mit den Arbeitsaggregaten und der Kabine 1.1 ausgeblendet. Der in **FIG.1** geöffnete Teil der Verkleidung 1.2 ist auch in dieser Darstellung wiederzufinden. Der Antriebsmotor 4 ist im Bereich hinter der Kühlereinheit 5 angedeutet. Die erfindungsgemäße Filtervorrichtung 6 und ihr Aufbau werden in dieser Darstellung deutlicher. Deutlich wird besonders das erfindungsgemäße Filterelement 8. Dieses Filterelement 8 besteht aus zwei Filtersegmenten 8.1 und 8.2. Durch das mehrteilig ausgeführte Filterelement 8 kann die Führung 14 etwa mittig der Filtervorrichtung 6 angeordnet werden. Das Führungssystem 9 profitiert von dieser Anordnung. Wenigstens zwei Führungselemente 12 können an der Führung 14 der Reinigungsvorrichtung angebracht werden. Die Reinigungseinrichtung 7 wird während des Betriebs mittels eines Linearantriebs verschoben. Die Verschiebung erfolgt entlang der dazugehörigen Führung 14 parallel zur Ebene Eᵥ. Eine Absaugvorrichtung wird an der Absaugöffnung 7.1 angebracht. Dadurch werden Verschmutzungen an den Filtereinheiten 8 sicherer entfernt. Zur Absicherung der Filtersegmente 8.1 und 8.2 sind am rechten Ende der Führung 14 Sicherungsmechanismen 15 angebracht. Hierbei handelt es sich um werkzeuglos bedienbare Verschlüsse.

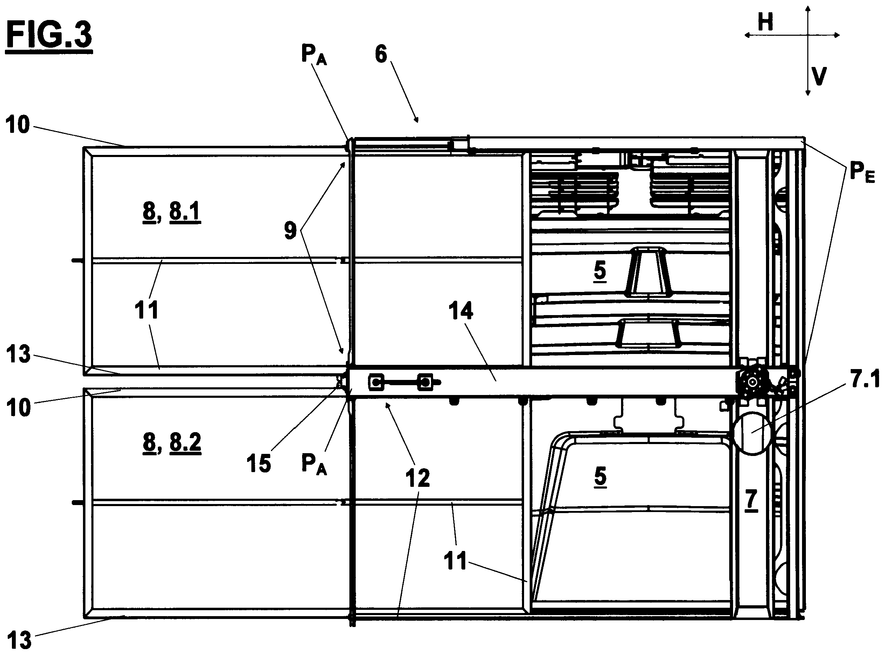

Die **FIG. 3** geht nun detaillierter auf die Filtervorrichtung 6 in einer Ansicht entgegen der Fahrtrichtung ein. Das mehrteilig ausgeführte Filterelement 8 wird durch ein Führungssystem 9 in der Filtervorrichtung 6 parallel zu der Ebene Ev gelagert. Dabei wird erfindungsgemäß ein Rahmen 11 eingesetzt, um das luftdurchlässige Material der Filtersegmente 8.1 und 8.2 zu stabilisieren. Die Rahmen 11 der Filtereinheit 8 sind derart ausgeführt, dass sie mit Führungselementen 12 in Eingriff gebracht werden. Eine besonders einfache Ausführung sieht vor, die Führungselemente 12 als U-Profile auszuführen. Die Kanten 10 und 13 der Rahmen 11 sind hierbei derart ausgelegt, dass die Kanten 10 und 13 einfach in die entsprechenden Führungselemente 12 eingeschoben werden können. Die Rahmen 11 können folglich aus einfachen Profilrohren angefertigt werden. Natürlich sind auch weitere Ausführungen des Führungssystems 9 denkbar.

Ein dargestelltes Führungssystem 9 sichert die Filtersegmente 8.1 und 8.2 des Filterelements 8 in und entgegen der Fahrtrichtung F sowie der dargestellten vertikalen Geraden V gesichert. Um eine ungewollte Bewegung quer zur Fahrtrichtung F zu verhindern, wird vorgeschlagen, die eingesetzten Führungselemente 12 entlang einer horizontalen Geraden H, quer zur Fahrtrichtung F zu sichern. Gemäß der dargestellten Ausführung werden die Endpunkte P_{E} der Führungselemente 12 verschlossen.

Damit ein schneller Zugang zu der Kühlereinheit 5 gewährt bleibt, wird erfindungsgemäß der Bereich des Anfangspunktes P_{A} ein Sicherungsmechanismus 15 eingesetzt. Durch den Sicherungsmechanismus 15 wird der Bereich des Führungselements 12 am Anfangspunkt P_{A} werkzeuglos verschlossen. Bei der gezeigten Ausführung handelt es sich bei dem Sicherungsmechanismus 15 um einen Hebel mit Drehspannverschluss.

## Patentansprüche

1. Selbstfahrende Erntemaschine (1) mit einem Fahrgestell (2), an dem Mittel zum Abstützen (3) auf dem Erdboden (B) angeordnet sind, welche ihrerseits durch einen Antriebsmotor (4) zur Fortbewegung über den Erdboden (B) antreibbar sind und einer Kühlereinheit (5) zur Kühlung von zumindest einem Aggregat der selbstfahrenden Erntemaschine (1), wobei die Kühlereinheit (5) von einer Filtervorrichtung (6) mit einem luftdurchlässigen Filterelement (8) vor Verunreinigungen, wie Staub, Ernteresten oder ähnlichen Verschmutzungen geschützt wird **dadurch gekennzeichnet, dass** das Filterelement (8) mehrteilig durch Filtersegmente (8.1, 8.2) ausgeführt ist, wobei die Filtersegmente (8.1, 8.2) zu Wartungszwecken einzeln entnommen werden.

2. Selbstfahrende Erntemaschine (1) nach zumindest Anspruch 1, **dadurch gekennzeichnet, dass** die Filtervorrichtung (6) ein Führungssystem (9) in einer etwa vertikalen Ebene (Eᵥ) aufweist, durch welches das mehrteilige Filterelement (8) zumindest entlang je einer Kante (10) wenigstens annähernd innerhalb der etwa vertikalen Ebene (Eᵥ) gesichert sind.

3. Selbstfahrende Erntemaschine (1) nach zumindest Anspruch 2, **dadurch gekennzeichnet, dass** die Filtersegmente (8.1, 8.2) des Filterelements (8) je einen Rahmen (11) zur Stabilisierung eines luftdurchlässigen Materials aufweisen, welcher zumindest entlang einer Kante (10) mit einem Führungselement (12) des Führungssystems (9) in Eingriff gebracht wird.

4. Selbstfahrende Erntemaschine (1) nach zumindest Anspruch 3, **dadurch gekennzeichnet, dass** die gegenüberliegende Kante (13) der mit dem Führungssystem (9) in Eingriff befindlichen Kante (10) der Filtersegmente (8.1, 8.2) durch zumindest eine Sicherungsvorrichtung derart arretiert wird, dass die Filtersegmente (8.1, 8.2) an zwei gegenüberliegenden Kanten (10, 13) wenigstens annähernd innerhalb der etwa vertikalen Ebene (Eᵥ) gesichert sind.

5. Selbstfahrende Erntemaschine (1) nach zumindest Anspruch 3, **dadurch gekennzeichnet, dass** die gegenüberliegende Kante (13) der mit dem Führungssystem (9) in Eingriff befindlichen Kante (10) der Filtersegmente (8.1, 8.2) mit einem weiteren Führungselement (12) in Eingriff gebracht wird, sodass die Filtersegmente (8.1, 8.2) an zwei gegenüberliegenden Kanten (10, 13) wenigstens annähernd innerhalb der etwa vertikalen Ebene (Eᵥ) gesichert sind.

6. Selbstfahrende Erntemaschine (1) nach zumindest einem der Ansprüche 1-5, **dadurch gekennzeichnet, dass** zumindest zwei Führungselemente (12) des Führungssystems (9) für die Filtersegmente (8.1, 8.2) entlang einer Führung (14) einer Reinigungsvorrichtung (7) verlaufen.

7. Selbstfahrende Erntemaschine (1) nach zumindest Anspruch 6, **dadurch gekennzeichnet, dass** die Führung (14) der Reinigungsvorrichtung (7) das Filterelement (8) in wenigstens zwei Abschnitte unterteilt, in die zumindest zwei Filtersegmente (8.1, 8.2) eingelassen werden.

8. Selbstfahrende Erntemaschine (1) nach zumindest einem der Ansprüche 6-7, **dadurch gekennzeichnet, dass** die Reinigungsvorrichtung (7) zumindest eine an wenigstens einer Führung (14) translatorisch bewegbare, wenigstens zyklisch arbeitende Absaugvorrichtung aufweist.

9. Selbstfahrende Erntemaschine (1) nach zumindest einem der Ansprüche 2-8, **dadurch gekennzeichnet, dass** die Führungselemente (12) der Filtersegmente (8.1, 8.2) an einem Endpunkt (P_{E}) derart verschlossen sind, dass eine Verlagerung der Filtersegmente (8.1, 8.2) über den Endpunkt (P_{E}) hinaus zumindest erschwert ist.

10. Selbstfahrende Erntemaschine (1) nach zumindest Anspruch 9, **dadurch gekennzeichnet, dass** die Führungselemente (12) der Filtersegmente (8.1, 8.2) an einem Anfangspunkt (P_{A}) mit einen Sicherungsmechanismus (15) versehen sind, welcher eine Verlagerung der Filtersegmente (8.1, 8.2) über den Anfangspunkt (P_{A}) hinaus wahlweise verhindert oder ermöglicht.
